# EUROPÄISCHE PATENTANMELDUNG

(11) **EP 0 896 207 A1**
(43) Veröffentlichungstag der Anmeldung: **10.02.1999**
(21) Anmeldenummer: 98810633.2
(22) Anmeldetag: 06.07.1998
(51) Int. Cl.: G01F 1/075

(54) **Umdrehungssensor für Flügelrad-Durchflussmesser und Flügelrad-Durchflussmesser mit einem Umdrehungssensor**

(30) Priorität: 11.07.1997 CH 1699/97
(71) Anmelder: Bernina Electronic AG, 8266 Steckborn (CH)
(72) Erfinder: Martini, Alfred, 8500 Frauenfeld (CH)
(74) Vertreter: AMMANN PATENTANWAELTE AG BERN

(57) **Zusammenfassung**

Bei einem Umdrehungssensor für Durchflussmesser mit einem Flügelrad (4), das mit einem Magneten (8) versehen ist, wobei ein Sensor (10) zur Erfassung der Drehzahl und der Drehrichtung des Magneten (8) sowie eine Auswerteschaltung (12 - 17) zur Verarbeitung der ermittelten Drehzahl und Drehrichtung vorgesehen sind, ist als Sensor in die als Sensor eine integrierte Schaltung (9) vorgesehen ist, in die zumindest drei Hall- oder Feldplatten-Sensoren (11), und Spulen zum Testen der Hall- oder Feldplatten-Sensoren (11) integriert sind. Die Verwendung der integrierten Schaltung (9) mit den Hall- oder Feldplatten-Sensoren (11) ergibt einen sehr kompakten und preisgünstigen Umdrehungssensor und gewährleistet zudem, dass auch nach Ausfall eines der Sensoren (11) die Flussrichtung noch zuverlässig erfassbar ist. Die in der integrierten Schaltung (9) integrierten Spulen ermöglichen, die Funktion der Hall-oder Feldplatten-Sensoren zu testen.

## Beschreibung

Die Erfindung betrifft einen Umdrehungssensor gemäss dem Oberbegriff des Patentanspruchs 1. Die Erfindung betrifft weiterhin einen Flügelrad-Durchflussmesser mit einem Umdrehungssensor.

Umdrehungssensoren mit einem integrierten (Permanent-)Magneten sind bekannt.

Das Prinzip der Drehzahl- und Drehrichtungserfassung eines Flügelrades zwecks Ermittlung der Durchflussmenge und -richtung besteht darin, dass die Nord- und Südpole des scheibenförmigen Magneten, welcher synchron mit dem Flügelrad rotiert, an zwei beabstandeten Magnetsensoren vorbeistreichen, welche mit einer Auswerteschaltung verbunden sind. Dabei erfassen die Magnetsensoren sowohl die Drehrichtung als auch die Drehzahl des Magneten, und damit auch des Flügelrades. Die Drehrichtung und die Drehzahl dienen der Auswerteschaltung als Grundlage für die Berechnung der Durchflussmenge. Falls ausser der Durchflussmenge auch noch die verbrauchte Energie erfasst und berechnet werden soll, können zusätzliche Mess- und Auswertemittel vorgesehen sein, wie zum Beispiel ein oder mehrere Temperaturfühler.

Ein Nachteil der eingangs beschriebenen Anordnung besteht darin, dass bei Ausfall eines der Magnetsensoren nur noch die Drehzahl, nicht aber die Drehrichtung des Flügelrades erfasst werden kann. Verschiedene Zulassungsbehörden für Wasser- und/oder Energiezähler verlangen jedoch eine Erkennung der Flussrichtung mit Redundanz: Die Flussrichtung muss auch nach Ausfall eines der Magnetsensoren noch zuverlässig erfassbar sein. Um diese Bedingung zu erfüllen, ist es bekannt, einen zusätzlichen dritten Magnetsensor vorzusehen. Dieser dient zwar lediglich als Reserve im Falle eines Defektes, hat aber eine nicht unbedeutende Kostensteigerung für den Umdrehungssensor zur Folge.

Der Erfindung liegt die Aufgabe zu Grunde, einen zuverlässigen und kostengünstigen Umdrehungssensor zu schaffen.

Erfindungsgemäss wird dies durch die Merkmale des kennzeichnenden Teils des Patentanspruchs 1 erreicht. Die Verwendung der integrierten Schaltung mit den Hall- oder Feldplatten-Sensoren ergibt nicht nur einen sehr kompakten und preisgünstigen Umdrehungssensor, sondern gewährleistet auch die erforderliche Redundanz. Die in der integrierten Schaltung integrierten Spulen ermöglichen, die Funktion der Hall- oder Feldplatten-Sensoren zu testen.

Weitere vorteilhafte Ausführungsformen gehen aus den Unteransprüchen hervor.

Nachfolgend wird eine beispielsweise Ausführungsform der Erfindung anhand der Zeichnung näher erläutert. Es zeigen:
- Fig. 1: eine schematische Längsschnittansicht des Flügelrad-Durchflussmessers gemäss der Erfindung,
- Fig. 2: eine Sensoranordnung gemäss dem Stand der Technik mit zwei Magnetsensoren,
- Fig. 3: eine Sensoranordnung gemäss dem Stand der Technik mit drei Magnetsensoren, und
- Fig. 4: die erfindungsgemässe Sensoranordnung mit einem Blockschaltbild der integrierten Schaltung 9.
- Fig. 5: eine schematische Draufsicht von einem in der integrierten Schaltung 9 enthaltenen Array von Hall- oder Feldplattensensoren 11 und einer daneben angeordneten Spule 21
- Fig. 6: eine schematische Seitenansicht der in Fig 5 gezeigten Anordnung vom einem Array von Hall- oder Feldplattensensoren 11 und der daneben angeordneten Spule 21

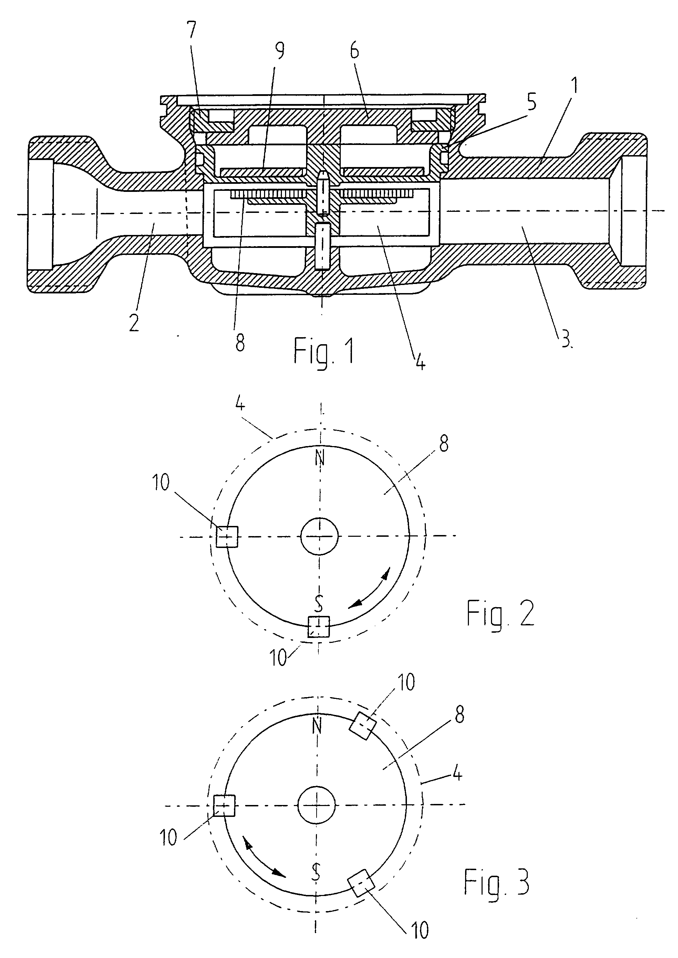

Die Figur 1 zeigt in einer schematischen Schnittansicht in Längsrichtung den mechanischen Aufbau eines erfindungsgemässen Flügelrad-Durchflussmessers (beispielsweise eines Wasserzählers). Das Flüssigkeits-Volumenmessteil besteht aus einem Gehäuse 1 (vorzugsweise aus Metall) mit einem Einlass 2 und einem Auslass 3. In einem runden Teil des Gehäuses 1 ist ein Flügelrad 4 drehbar angeordnet. Über dem Flügelrad 4 ist ein Deckel 5 aus Nichteisenmetall vorgesehen, welcher den Innenraum mit dem unter Druck stehenden Medium nach aussen abdichtet. Auf dem Deckel 5 liegt ein Deckelhalter 6, welcher mit Hilfe eines Gewinderinges 7 am Gehäuse 1 befestigt ist und zur Positionierung des Deckels 5 dient. Das Flügelrad 4 ist mit einem scheibenförmigen Permanentmagneten 8 versehen. An der Oberseite des Deckels 5 ist die integrierte Schaltung 9 vorgesehen.

In den Figuren 2 und 3 ist jeweils eine Sensoranordnung gemäss dem Stand der Technik mit zwei, beziehungsweise drei Magnetsensoren 10 wiedergegeben. Zwecks Ermittlung der Durchflussmenge und -richtung sind zur Drehzahl- und Drehrichtungserfassung des Flügelrades 4 zwei (siehe Figur 2) oder drei (siehe Figur 3) beabstandete Magnetsensoren 10 am Gehäuse 1 des Umdrehungssensors vorgesehen. Die Nord- und Südpole des beispielsweise scheibenförmigen Permanentmagneten 8, welcher am Flügelrad 4 befestigt ist und mit diesem rotiert, streichen jeweils an den zwei, beziehungsweise drei beabstandeten Magnetsensoren 10 vorbei, welche mit einer Auswerteschaltung verbunden sind. Dabei erfassen die Magnetsensoren 10 sowohl die Drehrichtung als auch die Drehzahl des Magneten 8, und damit auch des Flügelrades 4. Aufgrund der Drehrichtung und der Drehzahl kann die (nicht dargestellte) Auswerteschaltung die Durchflussmenge und -richtung berechnen. Bei der Verwendung dreier Magnetsensoren 10 gemäss Figur 3 ist es auch nach Ausfall eines der Magnetsensoren 10 noch möglich, die Flussrichtung zuverlässig zu erfassen.

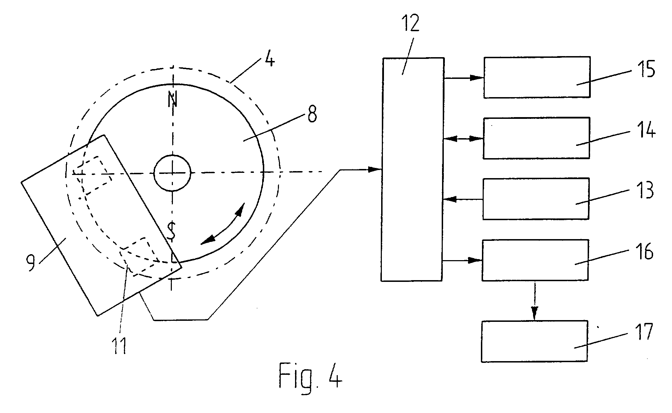

Die Figur 4 zeigt die erfindungsgemässe Sensoranordnung mit einem Blockschaltbild der integrierten Schaltung. Über der Randzone des mit dem Flügelrad 4 rotierenden Permanentmagneten 8 ist die integrierte Schaltung 9 angeordnet. In diesen Chip 9 ist ein Array von Hall- oder Feldplatten-Sensoren 11 integriert. Beispielsweise sind 12 Hall-Sensoren in Rechteckform aneinandergefügt und derart im Chip 9 über der Randzone des rotierenden Magneten 8 angeordnet, dass sie durch die vorbeistreichenden Magnetpole in Abhängigkeit von der Drehrichtung in einer bestimmten Reihenfolge erregt werden und eine entsprechende Signalfolge liefern. Diese Signalfolge wird in der Auswerteschaltung 12 - 17 erfasst und verarbeitet.

Die Hall- oder Feldplatten-Sensoren 11 sind an sich bekannte Halbleiterbauelemente.

Die Signalfolge wird bei Ausfall eines oder mehrerer Hall-Sensoren nur unwesentlich verändert. Beeinträchtigt wird lediglich die Empfindlichkeit des Arrays, was jedoch für die bestimmungsgemässe Funktion nicht von Bedeutung ist. Das Hall-Sensoren-Array reagiert ohnehin empfindlicher als die bekannten Magnetsensoren 10.

Die Auswerteschaltung umfasst einen Mikroprozessor 12, welcher mit einem Read-Only-Memory 13 und einem Random-Access-Memory 14 verbunden ist. Weiterhin ist der Mikroprozessor 12 mit einem Anzeigemodul 15, mit einer Ausgabeschnittstelle 16 und über diese mit einer Abrechnungseinheit 17 verbunden.

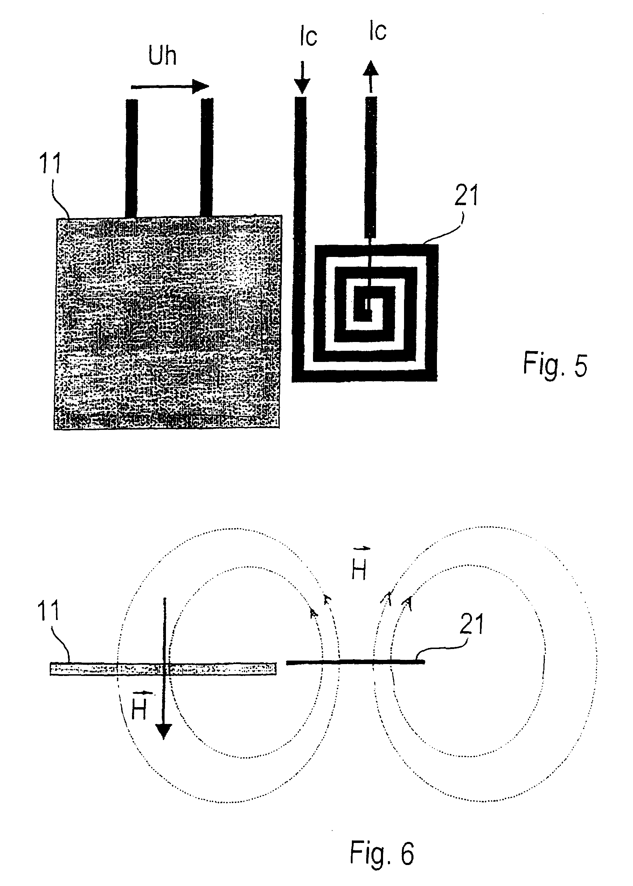

In einer bevorzugten Ausführungsform sind in die integrierte Schaltung 9 zusätzlich Spulen zum Testen der Hall- oder Feldplatten-Sensoren 11 integriert. Wie anhand der Figuren 5 und 6 dargestellt, ist dabei in der integrierten Schaltung 9 neben jedem Array von Hall- oder Feldplatten-Sensoren 11 eine Spule 21 angeordnet. Zur Durchführung des Tests wird die Spule 21 mit einem Strom Ic gespiesen, um ein magnetisches Feld H zu erzeugen. Bei korrekter Funktionsweise liefert jeder Array von Hall- oder Feldplatten-Sensoren 11 im Ansprechen auf das Feld H eine Spannung Uh, deren Wert in einem vorbestimmten Bereich liegen muss. Wird diese Bedingung nicht erfüllt, wird ein entsprechendes Fehlersignal erzeugt.

Mittels der Spulen 21 können daher die Sensoren 11 einfach getestet werden.

Jede der Spulen 21 kann als eine mehrschichtige elektrische Leitung auf dem Chip 9 gebildet sein. Zur Vereinfachung der Darstellung ist aber in den Figuren 5 und 6 nur eine Schicht einer solchen Spule dargestellt.

## Patentansprüche

1. Umdrehungssensor für Durchflussmesser mit einem Flügelrad (4), welches mit einem Magneten (8) versehen ist, wobei zumindest ein Sensor (10) zur Erfassung der Drehzahl und der Drehrichtung des Magneten (8) sowie eine Auswerteschaltung (12 - 17) zur Verarbeitung der ermittelten Drehzahl und Drehrichtung vorgesehen sind,
**dadurch gekennzeichnet, dass**
als Sensor eine integrierte Schaltung (9) vorgesehen ist, in die
(a) zumindest drei Hall- oder Feldplatten-Sensoren (11), und
(b) Spulen zum Testen der Hall- oder Feldplatten-Sensoren (11)
integriert sind.

2. Umdrehungssensor nach Anspruch 1, **dadurch gekennzeichnet, dass** die Auswerteschaltung (12 - 17) ein Fehlersignal erzeugt, falls die Funktion der Hall- oder Feldplatten-Sensoren (11) nicht mehr gewährleistet ist.

3. Flügelrad-Durchflussmesser mit einem Umdrehungssensor nach einem der Ansprüche 1 oder 2.
